# FASCICULE DE BREVET EUROPEEN

(11) **EP 1 415 107 B1**
(45) Date de publication et mention de la délivrance du brevet: **12.09.2007**
(21) Numéro de dépôt: 01274341.5
(22) Date de dépôt: 06.07.2001
(51) Int. Cl.: F21K 2/00, C09K 11/02

(54) **PROCEDE DE FABRICATION D'UN MATERIAU PHOTOLUMINESCENT ET LE MATERIAU OBTENU**
VERFAHREN ZUR HERSTELLUNG EINES PHOTOLUMINESZENTEN MATERIALS UND SO ERHALTENES MATERIAL
METHOD OF PRODUCING A PHOTOLUMINESCENT MATERIAL AND THE MATERIAL THUS OBTAINED

(43) Date de publication de la demande: 06.05.2004
(73) Titulaire: Armony Signaletique S.A.R.L., 01150 Vaux en Bugey (FR)
(72) Inventeur: DELAUNAY, Thierry, F-38118 SAINTE BAUDILLE DE LA TOUR (FR)
(74) Mandataire: Rhein, Alain
(86) Numéro de dépôt international: PCT/FR2001/002182
(87) Numéro de publication internationale: WO 2003/004928

(56) Documents cités:
- WO-A-99/27294
- BE-A- 868 269
- US-A- 5 374 377
- US-A- 6 123 871
- US-B1- 6 207 077
- PATENT ABSTRACTS OF JAPAN vol. 1998, no. 14, 31 décembre 1998 (1998-12-31) & JP 10 250006 A (MITSUBISHI CHEM MKV CO), 22 septembre 1998 (1998-09-22)

## Description

La présente invention a pour objet un procédé de fabrication d'un matériau photoluminescent et le matériau obtenu.

Les matériaux photoluminescents sont utilisés dans de nombreux domaines, ils tendent notamment à remplacer les matériaux réfléchissants qui ne peuvent pas émettre de rayonnement lumineux hors exposition.

Ces matériaux trouvent une application particulièrement avantageuse dans le domaine de la sécurité, afin de matérialiser des accès ou des passages peu éclairés. Ils permettent d'absorber la lumière du jour ou la lumière artificielle, pour en restituer une partie dans l'obscurité.

La luminescence est obtenue par l'intermédiaire de pigments issus généralement de sulfure de zinc ou d'aluminate ou d'arséniate de strontium.

Il existe plusieurs procédés de fabrication de matériaux photoluminescents, les principaux étant l'application d'une peinture ou d'une résine incorporant les pigments précités, l'injection dans la matière, ou bien l'utilisation de film obtenu par enduction.

Quel que soit le procédé utilisé, il est nécessaire de réaliser deux opérations, l'application d'une sous-couche blanche, et l'application d'un vernis ou d'un film de protection contre les rayons ultraviolets.

Ces deux opérations constituent un inconvénient du point de vue fabrication notamment en terme de coût. Par ailleurs, le produit obtenu présente des inconvénients du point de vue rendement de luminosité, et tenue dans le temps du matériau ce qui limite son utilisation.

Par ailleurs, le matériau obtenu est souvent de résistance mécanique limitée, ce qui réduit le domaine d'utilisation dudit matériau.

Un procédé de fabrication comportant les caractéristiques du préambule de la revendication 1 est décrit dans US-A-5,374,377.

La présente invention a pour but de proposer un procédé de fabrication d'un matériau photoluminescent et le matériau obtenu, permettant de remédier aux divers inconvénients précités.

Le procédé de fabrication d'un matériau photoluminescent selon la revendication 1 est du type utilisant des pigments photoluminescents, et il consiste à intégrer lesdits pigments dans une matière plastique, puis à réaliser un film par une opération de calandrage à partir du mélange obtenu, enfin à thermocoller ledit film sur un support quelconque, sur lequel aura été préalablement appliquée une sous-couche ayant des propriétés de réflexion.

Selon une caractéristique additionnelle du procédé selon l'invention, les pigments sont choisis parmi des pigments issus de sulfure de zinc ou d'aluminate ou d'arséniate de strontium.

Selon une autre caractéristique additionnelle du procédé selon l'invention, la matière plastique consiste en du chlorure de polyvinyle (PVC).

Le procédé permet d'obtenir un meilleur chargement de la matière en pigments, de l'ordre de 100g/m², en sorte qu'il n'est pas indispensable d'utiliser une sous-couche blanche pour atteindre la luminance des matériaux luminescents connus actuellement.

Par ailleurs, le calandrage permet, outre une répartition tout aussi homogène des pigments que dans la technique par enduction, d'obtenir un matériau plus résistant, du point de vue physique, que les matériaux analogues connus, ce qui permet d'envisager des applications nouvelles.

On notera qu'il est bien entendu possible d'appliquer une sous-couche permettant d'accroître l'effet photoluminescent, ladite sous-couche peut avantageusement être de différentes natures et/ou de différentes couleurs, ce qui autorise des effets esthétiques nouveaux.

De manière avantageuse, la sous-couche consiste en une feuille d'aluminium ou analogue.

L'utilisation de l'une ou l'autre de ces sous-couches dans le procédé selon l'invention permet d'obtenir un matériau luminescent d'une luminance non atteinte par les matériaux luminescents actuellement connus.

Par ailleurs, avantageusement, le matériau obtenu par le procédé selon l'invention, ne nécessite pas l'application d'un film de protection contre les rayons ultraviolets.

On peut toutefois y déposer un vernis réticulaire, susceptible d'assurer non seulement une protection accrue du matériau contre les ultraviolets, mais également contre des agressions chimiques, ce qui présente un grand intérêt pour une utilisation pour du matériel de sécurité en environnement hostile.

Les avantages et les caractéristiques du procédé selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en coupe d'un matériau photoluminescent obtenu par un procédé de fabrication de type connu.
- la figure 2 représente une vue schématique en coupe d'un matériau photoluminescent obtenu par le procédé de fabrication selon l'invention.
- la figure 3 représente une vue schématique en coupe d'un matériau photoluminescent obtenu par une variante du procédé de fabrication selon l'invention.

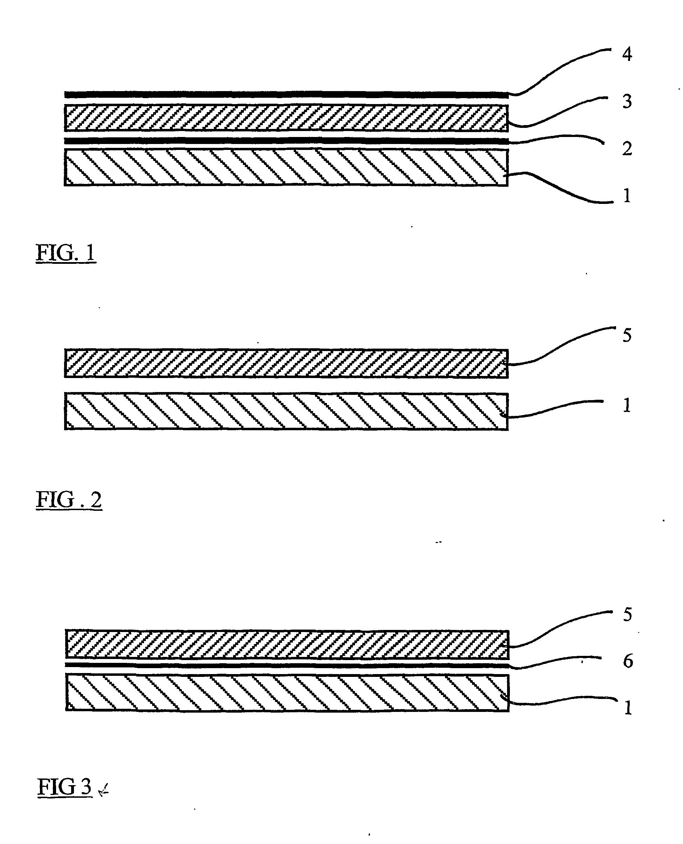

En référence à la figure 1, on peut voir qu'un matériau photoluminescent obtenu par un procédé de fabrication de type classique, présente une superposition de couches de matériaux différents.

Il comporte un support 1 qui peut être de différentes natures, sur lequel est appliquée une sous-couche 2 de couleur blanche. Sur le support 1 est appliqué un film 3 incorporant des pigments déposés par enduction, qui est recouvert d'un film 4 de protection contre les rayons ultraviolets, un film cristal par exemple.

En référence maintenant à la figure 2, on peut voir un matériau photoluminescent qui n'est pas obtenu par le procédé selon l'invention, et qui comprend un support 1 sur lequel est directement appliqué par thermocollage un film 5 de PVC intégrant des pigments photoluminescents et qui est obtenu par calandrage.

A titre d'exemple non limitatif, un film 5 réalisé par le procédé selon l'invention, peut présenter une épaisseur de 2/10 avec une concentration de pigments de 100g/m², et une luminance de 129,8/17,4 - 2140 selon la norme DIN 67510 partie 1.

Un tel film présente une luminance au moins égale à celle des produits tels que celui obtenu par le procédé illustré sur la figure 1.

De plus, du fait de son mode de fabrication, c'est-à-dire du fait du calandrage, il est plus résistant du point de vue physique. Par ailleurs il est bien moins coûteux, puisqu'il ne nécessite pas l'application d'un film protecteur.

En référence maintenant à la figure 3, on peut voir que selon le procédé de l'invention, il est intercalé entre le support 1 et le film 5, une sous-couche 6, laquelle peut être constituée d'une feuille d'aluminium.

Le matériau photoluminescent obtenu du procédé selon l'invention, présente, outre un aspect esthétique inconnu jusqu'à maintenant, une luminance supérieure à celle des matériaux photoluminescents connus à ce jour.

Le matériau photoluminescent obtenu par le procédé de fabrication selon l'invention, trouve, de manière non limitative, une application particulière dans le domaine vestimentaire, et plus particulièrement dans la fabrication de chaussures, essentiellement de sport.

## Revendications

1. Procédé de fabrication d'un matériau photoluminescent du type consistant à intégrer des pigments photoluminescents dans une matière plastique, puis à réaliser un film (5) par une opération de calandrage à partir du mélange obtenu, **caractérisé en ce qu'**il consiste à thermocoller ledit film (5) sur un support quelconque (1), sur lequel aura été préalablement appliquée une sous-couche (6) ayant des propriétés de réflexion.

2. Procédé de fabrication selon la revendication 1, **caractérisé en ce que** les pigments sont choisis parmi des pigments issus de sulfure de zinc ou d'aluminate ou d'arséniate de strontium.

3. Procédé de fabrication selon la revendication 1 ou la revendication 2, **caractérisé en ce que** la matière plastique consiste en du chlorure de polyvinyle (PVC).

4. Procédé de fabrication selon l'une quelconque des revendications 1 à 3, **caractérisé en ce** la sous-couche (6) consiste en une feuille d'aluminium ou analogue.

5. Procédé selon l'une quelconque des revendications précédentes, **caractérisé en ce que** l'on procède au dépôt, sur le film (5) obtenu, d'un vernis réticulaire.

6. Matériau photoluminescent **caractérisé en ce qu'**il est obtenu par le procédé de fabrication selon l'une quelconque des revendications précédentes.

## Claims

1. Method for producing a photoluminescent material of the type consisting in integrating photoluminescent pigments into a plastic, then in forming a film (5) by a calendering operation starting from the mixture obtained, **characterised in that** it consists in bonding said film (5) onto any carrier whatsoever (1), to which will previously have been applied an undercoat (6) having reflective properties.

2. Method for producing according to claim 1, **characterised in that** the pigments are selected among pigments resulting from zinc sulphide or strontium aluminate or arsenate.

3. Method for producing according to claim 1 or claim 2, **characterised in that** the plastic consists of polyvinyl chloride (PVC).

4. Method for producing according to any of claims 1 to 3, **characterised in that** the undercoat (6) consists of an aluminium sheet or the like.

5. Method according to any of the preceding claims, **characterised in that** one proceeds to depositing, on the film (5) obtained, a reticular varnish.

6. Photoluminescent material, **characterised in that** it is obtained by the method for producing according to any of the preceding claims.

## Patentansprüche

1. Verfahren zur Herstellung eines photolumineszenten Materials der Art, die darin besteht, photolumineszente Pigmente in einen Kunststoff zu integrieren, anschließend, durch einen Kalandriervorgang eine Folie (5) aus der erhaltenen Mischung zu bilden, **dadurch gekennzeichnet, daß** es darin besteht, die besagte Folie (5) auf irgendeinem Träger (1) zu bonden, auf dem vorher eine Unterschicht (6), die Reflexionseigenschaften besitzt, angebracht worden ist.

2. Verfahren zur Herstellung nach Anspruch 1, **dadurch gekennzeichnet, daß** die Pigmente aus Pigmenten gewählt werden, die aus Zinksulfid oder Strontiumaluminat oder -arsenat hergestellt sind.

3. Verfahren zur Herstellung nach Anspruch 1 oder Anspruch 2, **dadurch gekennzeichnet, daß** der Kunststoff aus Polyvinylchlorid (PVC) besteht.

4. Verfahren zur Herstellung nach irgendeinem der Ansprüche 1 bis 3, **dadurch gekennzeichnet, daß** die Unterschicht (6) aus einer Aluminiumfolie oder dergleichen besteht.

5. Verfahren nach irgendeinem der vorgehenden Ansprüche, **dadurch gekennzeichnet, daß** die Abscheidung, auf die erhaltene Folie (5), eines retikulären Lacks vorgenommen wird.

6. Photoluminescentes Material, **dadurch gekennzeichnet, daß** es durch das Verfahren zur Herstellung nach irgendeinem der vorgehenden Ansprüchen erhalten wird.
